# EUROPEAN PATENT APPLICATION

(11) **EP 4 799 928 A1**
(43) Date of publication of application: **02.09.2026**
(21) Application number: 26158104.5
(22) Date of filing: 12.02.2026
(51) Int. Cl.: B64C 13/50

(54) **CONTROL AND MONITORING ARCHITECTURES FOR HIGH-LIFT SYSTEMS**

(30) Priority: 27.02.2025 DE 102025000720
(71) Applicant: Airbus Operations GmbH, 21129 Hamburg (DE)
(72) Inventor: Haserodt, Jan, 21129 Hamburg (DE); Demand, John, 21129 Hamburg (DE)
(74) Representative: Airbus Germany

(57) **Abstract**

An actuation assembly (10) is provided, The actuation assembly (10) comprises a control unit (40), a monitoring unit (50), at least one high voltage power supply (32), at least one low voltage power supply (34) and at least two power bridges (60a, 60b). The at least one low voltage power supply (34) is configured to be connected to a source to provide power to the control unit (40) and to the monitoring unit (50), wherein the control unit (40) and the monitoring unit (50) are configured to monitor elements of a sub-system comprising at least one of an electric motor, a brake or a sensor. The at least one high voltage power supply (32) is configured to be connected to a source to provide power to each of the at least two power bridges (60a, 60b). And the at least two power bridges (60a, 60b) are each configured to be coupled with an electric motor.

## Description

### FIELD OF THE INVENTION

The present invention generally relates to high-lift system architectures in aircrafts. In particular, the invention relates to an actuation assembly for a high-lift device, an actuation arrangement, a high-lift system, an aircraft wing, an aircraft and a method for actuating a movable flow device of an aircraft.

### BACKGROUND OF THE INVENTION

For increasing the lift coefficient of a wing of an aircraft, high-lift systems are used. These include movable trailing-edge flaps and/or leading-edge devices (slats), which are selectively operable and are usually activated during takeoff and landing, i.e., moved from a retracted into an extended position.

Flap or slat actuation systems can be operated centrally with mechanical transmission shafts being routed along the wing, or can be operated using a distributed drive system architecture, as for example the one disclosed in EP 4400418 A1. In such distributed drive systems however, a high number of motor control electronics is used which are complex and costly parts. Apart from the aim to reduce complexity and costs, there is a constant need in aviation industries to reduce the number of parts required.

### SUMMARY OF THE INVENTION

It is an object of the invention to provide an actuation assembly with an improved architecture for driving a movable flow body of an aircraft. The object of the present invention is solved by the subject-matter of the independent claims. Further embodiments are incorporated in the dependent claims.

Provided is an actuation assembly, an actuation arrangement, a high lift system, an aircraft wing, an aircraft and a method according to the features of the independent claims.

According to the invention, an actuation assembly is provided. The actuation assembly comprises a control unit, a monitoring unit, at least one high voltage power supply, at least one low voltage power supply and at least two power bridges. The at least one low voltage power supply is configured to be connected to a source to provide power to the control unit and to the monitoring unit, and the control unit and the monitoring unit are configured to monitor elements of a sub-system comprising at least one of an electric motor, a brake or a sensor. The at least one high voltage power supply is configured to be connected to a source to provide power to each of the at least two power bridges. And the at least two power bridges are each configured to be coupled with an electric motor.

The control unit and the monitoring unit can monitor the behaviour of a sub-system such as, for example, an electric motor. In an example, the control unit is configured to provide motor control commands to the at least two power bridges.

One advantage of this assembly is that one control unit can command two or more power bridges with individual drive commands, and each of the two or more power bridges are configured to be coupled with an electric motor. The two or more power bridges can commonly use the logic board for control, and the monitoring logic board can be commonly used, e.g. to collect sensor data from the sub-system or to interact with a control board of the control unit.

The term "actuation assembly" relates to a system of mechanical and/or electronic components designed to move or control a sub-system such as an electric motor which can drive one or more flaps or slats of an aircraft wing and also to monitor the behaviour of the motor and further elements in the sub-system. The actuation assembly may also be referred to as drive assembly or as a motor control electronics (MCE) unit or simply as a controller.

The term "control unit" relates to a unit which regulates the movement of an electric motor, for example by commanding the commutation in the power bridges (also referred to as inverter) which are configured to be coupled with the electric motor. The control unit may also be referred to as control side or control system.

The term "monitoring unit" relates to a unit that monitors the behaviour of the electric motor and/or further elements in a sub-system. The monitoring unit is responsible for overseeing the performance and status of the motor, ensuring proper operation, safety, and efficiency. It may also collect data from sensors and feedback systems to detect faults, track position, and optimize performance. The monitoring unit may also be referred to as monitoring side or monitoring system.

The monitoring unit and the control unit together can monitor elements of a sub-system comprising at least one of an electric motor, a brake or a sensor.

The term "sub-system" relates to one or more of an electric motor, a sensor such as a load sensor or a position sensor, and a brake, for example a power-off brake.

The "high voltage power supply" can be either DC (Direct Current) or AC (Alternating Current). The "low voltage power supply" preferably is a DC (Direct Current) supply.

The term "power bridge" relates to a circuit that controls the direction and speed of an electric motor by regulating the flow of electrical power. It can use high-power semiconductor switches (like MOSFETs or IGBTs) to convert DC or AC input into the required form for motor operation. A power bridge may also be referred to as an H-Bridge or inverter bridge. It can also contain further elements needed to operate with an AC supply, e.g.a Transformer Rectifier Unit.

The "source to provide power" refers to an electrical power source.

An "electric motor" refers to a device that converts electrical energy into mechanical energy using electromagnetic principles. Preferably, an electric motor refers to an electric brushless DC motor or a redundant electric brushless DC motor. It can refer to a single electric motor, a redundant electric motor or two single electric motors. In an example, the electric motor can be a single electric motor, e.g. coupled with two power bridges or can be a redundant electric motor coupled with two power bridges, or can be two single motors coupled with one power bridge each. The electric motor can also be referred to as drive unit.

The control unit and the monitoring unit may form a functional block and the power bridges may form a further functional block for the power stage needed for motor supply and control. The actuation assembly is an actuation assembly for a high-lift device and can for example be used for actuating a motor in a trailing edge high-lift system or for actuating a motor in a leading edge high-lift system.

According to an example, the control unit, the monitoring unit and the at least two power bridges are arranged within a common housing defining a motor control electronics unit.

The motor control electronics unit comprises at least two power bridges instead of only one power bridge, wherein the at least two power bridges can commonly use the control and monitoring logic boards. This has the effect that one motor control electronics unit can provide commands to operate at least two electric motors via the at least two power bridges.

The term "common housing" refers to a shared enclosure or a shared panel that can hold multiple components. A housing may also be referred to as a case or a board.

The term "motor control electronics unit" refers to a device or system that manages and regulates the operation of an electric motor. The Motor Control Unit may also be referred to as MCU, as Motor Control Electronics, MCE, or Motor Control Electronics Unit, MCEU. Thus, the terms MCU, MCE and MCEU can be used interchangeably.

According to an example, the control unit and the monitoring unit are arranged within a common housing defining a motor control electronics unit, and the at least two power bridges are spatially separated from the common housing defining a motor control electronics unit.

The term "spatially separated" refers to being outside the common housing. For example, the at least two power bridges may be arranged in separate housings near an electric motor. As an advantage, the power bridge to motor cable can be as short as possible.

According to an example, the motor control electronics unit is configured to be connected with a data network and the data network is connected with a Flight Control Computer.

The term "data network" refers to a system that allows the exchange of digital information.

A "Flight Control Computer" refers to a central Control Computer such as, for example, a central Flight Control Computer (FCC) or a Slat Flap Control Computer (SFCC). The Control Computer may also simply be referred to as FCC or SFCC.

According to the invention, an actuation arrangement is provided, comprising a primary actuation assembly and a secondary actuation assembly as defined above, wherein at least two power bridges are arranged within or spatially separated from a common housing defining a motor control electronics unit.

The primary actuation assembly comprises a first primary power bridge and a second primary power bridge. The secondary actuation assembly comprises a first secondary power bridge and a second secondary power bridge.

The first primary power bridge is configured to be coupled with a first electric motor and the second primary power bridge is configured to be coupled with a second electric motor. The first secondary power bridge is configured to be coupled with the first electric motor and the second secondary power bridge is configured to be coupled with the second electric motor, such that the first primary power bridge and the first secondary power bridge can drive the first electric motor and the second primary power bridge and the second secondary power bridge can drive the second electric motor.

For example, the electric motors can be single motors or can be redundant or also can be two electric motors coupled with one power bridge each.

As an effect, the number of motor control electronics for controlling two single or two redundant or four individual electric motors may be reduced to two.

According to the invention, an actuation arrangement is provided, comprising a primary actuation assembly and a secondary actuation assembly as defined above, wherein the at least two power bridges are spatially separated from the common housing defining a motor control electronics unit.

The primary actuation assembly comprises a first primary power bridge, a second primary power bridge, a third primary power bridge and a fourth primary power bridge. The secondary actuation assembly comprises a first secondary power bridge, a second secondary power bridge, a third secondary power bridge and a fourth secondary power bridge.

The first primary power bridge is configured to be coupled with a first electric motor, the second primary power bridge is configured to be coupled with a second electric motor; the third primary power bridge is configured to be coupled with a third electric motor; and the fourth primary power bridge is configured to be coupled with a fourth electric motor. The first secondary power bridge is configured to be coupled with the first electric motor, the second secondary power bridge is configured to be coupled with the second electric motor; the third secondary power bridge is configured to be coupled with the third electric motor; and the fourth secondary power bridge is configured to be coupled with the fourth electric motor, such that the first primary power bridge and the first secondary power bridge can drive the first electric motor, the second primary power bridge and the second secondary power bridge can drive the second electric motor, the third primary power bridge and the third secondary power bridge can drive the third electric motor, and the fourth primary power bridge and the fourth secondary power bridge can drive the fourth electric motor.

As an effect, eight separate power bridges can be established close to four electric motors and the number of motor control electronics for controlling four electric motors can be reduced to two.

According to an example, an actuation arrangement as described above further comprises at least one electric motor, a plurality of transmission shafts and a plurality of actuators. The at least two power bridges of the actuation assemblies are coupled each with at least one of the plurality of electric motors. Each one of the plurality of electric motors is coupled with at least one of the plurality of transmission shafts, and each of the plurality of transmission shafts is coupled with at least one of the plurality of actuators, and the plurality of actuators is configured to be coupled with a movable flow body of an aircraft.

According to the invention, a high-lift system is provided comprising at least one actuation arrangement as defined above, and at least one movable flow body of an aircraft, wherein at least two actuators of the actuation arrangement are coupled with the at least one movable flow body of the aircraft, such that the electric motors of the at least one actuation arrangement can drive the at least one movable flow body, and wherein the high-lift system is a trailing edge high-lift system.

The term "movable flow body" refers to a component on an aircraft that can be adjusted or moved to control or manage the flow of air over the aircraft's surfaces, typically to improve aerodynamics or performance. A movable flow body can be moved between one or more extended position(s) and a retracted position relative to a fixed structure of a wing of an aircraft. A movable flow body can also be referred to as a movable flow device and may further be referred to as a high-lift device or a movable high-lift device. A movable flow body of an aircraft wing comprises, for example, flaps and slats, and may also comprise Kruger flaps.

In an example, the high-lift system is a leading edge high-lift system.

According to the invention, a wing of an aircraft is provided, comprising at least one high-lift system as defined above.

According to the invention, an aircraft is provided comprising at least one wing as defined above and/or at least one high-lift system as defined above and/or at least one actuation arrangement as defined above and/or at least one actuation assembly as defined above.

According to the invention, also a method for actuating a movable flow body of an aircraft is provided, comprising the steps:
providing a control unit, a monitoring unit and at least two power bridges; and
providing high voltage supply to the at least two power bridges; wherein the at least two power bridges are each configured to be coupled with an electric motor.

In an aspect, the present invention relates to an actuation assembly for a high-lift device and to alternative control and monitoring architectures of components that form part of an actuation assembly or a motor control electronics unit for a high-lift device. In particular, two or more power bridges are provided, which commonly use the control and monitoring logics board of a motor control unit. The two or more power bridges can be arranged within a common housing of a motor control electronics unit or can be arranged spatially separated, i.e. outside the common housing of the motor control electronics unit, for example in a separate housing near the electric motors. Thus, many arrangements are feasible, which all have in common that they can reduce the number of actuation assemblies/motor control electronics units required to operate electric motors.

This and other aspects of the present invention will become apparent from and be elucidated with reference to the embodiments described hereinafter.

### BRIEF DESCRIPTION OF THE DRAWINGS

The present invention will hereinafter be described in conjunction with the following figures, wherein like numerals denote like elements, and wherein:
Fig. 1 shows a schematic illustration of an actuation arrangement for driving movable flow bodies of an aircraft.
Fig. 2 shows a schematic illustration of an example of an actuation assembly.
Fig. 3 shows a schematic illustration of an actuation assembly for a high-lift device.
Fig. 4 shows a schematic illustration of an example of an actuation arrangement for driving movable flow bodies of an aircraft.
Figs. 5 to 7 show schematic illustrations of examples of an actuation arrangement for driving movable flow bodies of an aircraft.
Fig. 8 shows an aircraft comprising a high-lift system.
Fig. 9 shows a flow diagram of a method for actuating a movable flow body of an aircraft.

### DETAILED DESCRIPTION OF EMBODIMENTS

The representations and illustrations in the drawings are schematic and not to scale. A better understanding of the assembly, the arrangement and the method described above may be obtained through a review of the illustrations accompanying this application together with a review of the detailed description that follows.

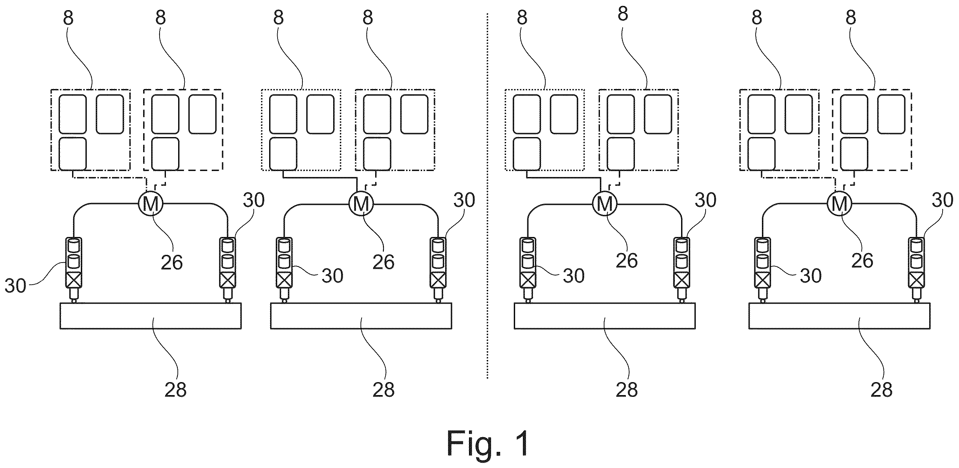

Fig. 1 shows a schematic illustration of an actuation arrangement for driving movable flow bodies of an aircraft. Four electric motors 26 are shown, two on the left side for driving two flaps 28 of the left wing of the aircraft, such as the left-hand inboard flap and the left-hand outboard flap, and two on the right side for driving two flaps 28 of the right wing of the aircraft, such as the right-hand inboard flap and the right-hand outboard flap. Two actuation assemblies 8 are connected with each motor 26 resulting in eight actuation assemblies 8 for the four electric motors 26. Each flap 28 is connected with two actuators 30 and the actuators 30 are connected via transmission shafts with one of the electric motors 26.

The different dashes of the motor control electronics units 8 represent different aircraft power sectors, i.e. the outboard flap pair is supplied by two electrical sources for redundancy and the inboard flap pair is supplied by another two electrical sources for redundancy.

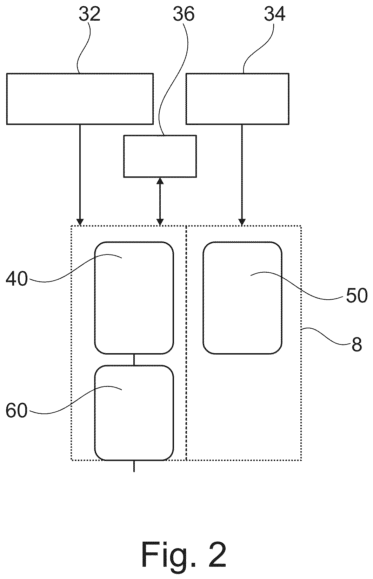

Fig. 2 shows a schematic illustration of an example of an actuation assembly. The actuation assembly 8 contains functional blocks for the control and monitoring logic boards and a functional block for the power stage needed for the motor supply and control of a brushless DC electric motor.

The actuation assembly 8 includes, in a common housing defining a motor control electronics unit, a control unit 40, a monitoring unit 50 and a power bridge 60 and further (not shown) elements such as a network interface or sensor interfaces. A low voltage power supply 34 is connected to a source (not shown) to provide power to the monitoring unit 50 and the control unit 40, wherein monitoring unit 50 can monitor an electric motor. A high voltage power supply 34 is connected to a source (not shown) to provide power to the control unit 40, and the control unit provides the power to a power bridge 60. The power bridge 60 is configured to be connected with an electric motor. Further, the actuation assembly 8 is connected with a data network 36 and the data network 36 is connected with a Flight Control Computer (not shown).

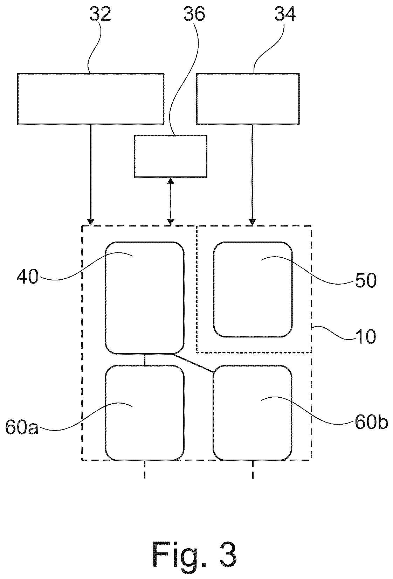

Fig. 3 shows a schematic illustration of an actuation assembly 10 for a high-lift device. The actuation assembly 10 includes, in a common housing, a control unit 40, a monitoring unit 50 and two power bridges 60a, 60b, wherein the control unit 40 controls if high voltage power reaches the power bridges 60a, 60b. Each of the power bridges 60a, 60b is configured to be connected to one electric motor driving a flap. Further, a low voltage power supply 34 and a connection with a data network 36 is shown as explained above with respect to Fig. 2.

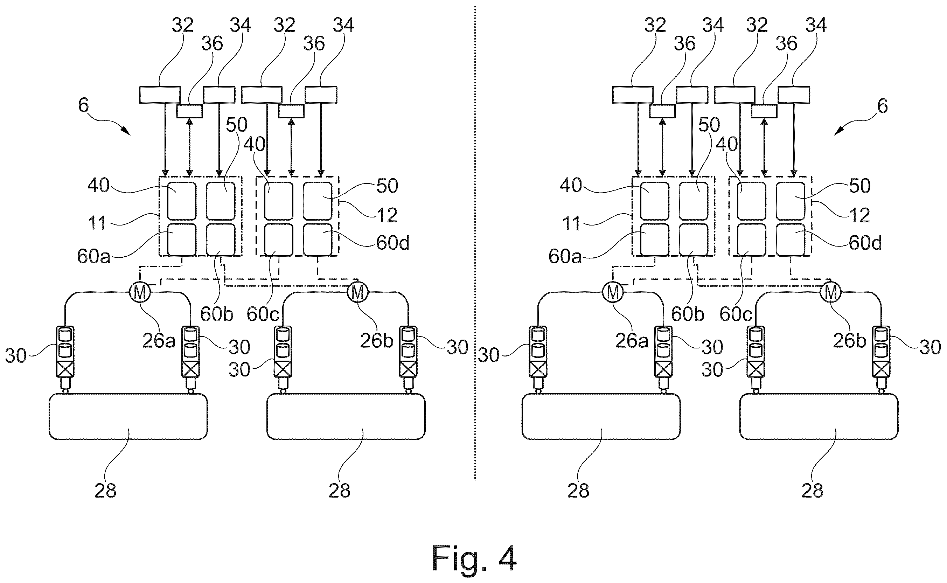

Fig. 4 shows a schematic illustration of an example of an actuation arrangement 6 for driving movable flow bodies of an aircraft. Shown here are two identical actuation arrangements 6 each including two actuation assemblies 11,12, a primary actuation assembly 11 and a secondary actuation assembly12. One actuation arrangement 6 is implemented within the left wing of the aircraft and the other actuation arrangement 6 is implemented within the right wing of the aircraft.

The actuation arrangement 6 includes a primary actuation assembly 11 with a first primary power bridge 60a and a second primary power bridge 60b. The actuation arrangement 6 further includes a secondary actuation assembly 12 with a first secondary power bridge 60c and a second secondary power bridge 60d. The first primary power bridge 60a is coupled with a first electric motor 26a and the second primary power bridge 60b is coupled with a second electric motor 26b. The first secondary power bridge 60c is coupled with the first electric motor 26a and the second secondary power bridge 60d is coupled with the second electric motor 26b. Thus, the first primary power bridge 60a and the first secondary power bridge 60c drive the first electric motor 26a and the second primary power bridge 60b and the second secondary power bridge 60d drive the second electric motor 26b. So, the power bridges 60a, 60b, 60c, 60d are cross-connected, i.e. connected crosswise, with the two electric motors 26a, 26b.

Each actuation assembly 11, 12 further comprises a control unit 40, a monitoring unit 50, a high voltage supply 32, a low voltage supply 34 and a connection with a data network 36 as described above with reference to Figs. 2 and 3. In each actuation assembly 11, 12 the control unit(s) 40, the monitoring unit(s) 50 and the two power bridges 60a, 60b and 60c, 60d, respectively, are arranged within a common housing defining a motor control electronics unit.

The first electric motor 26a and the second electric motor 26b are connected via transmission shafts with two actuators 30, and the two actuators 30 are each coupled with a flap 28, such that the electric motors 26a, 26b can drive the flaps 28. In an example, the actuators include a load sensor and a position sensor, respectively.

As already explained with respect to Fig. 1, different dashes of the actuation assemblies 11, 12 represent different aircraft power sectors. The finer dashed line (primary actuation assembly 11, on the left side in each of the two arrangements) is supplied by one electrical aircraft sector and the coarser dashed line (secondary actuation assembly 12, on the right side in each of the two arrangements) is supplied by another aircraft sector, thus providing redundancy for driving the flaps 28. In this example, the number of actuation assemblies needed for driving four flaps 28 is reduced to four.

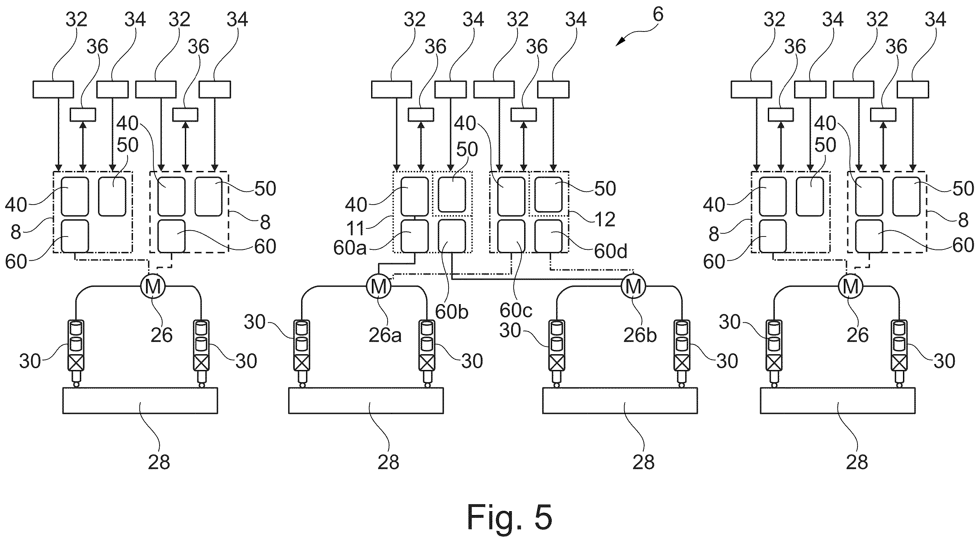

Figs. 5 to 7 show schematic illustrations of examples of actuation arrangements for driving movable flow bodies of an aircraft. Each actuation assembly of the arrangements shown in Figs. 5 to 7 comprises a control unit 40, a monitoring unit 50, a high voltage supply 32, a low voltage supply 34 and a connection with a data network 36 as described above with reference to Figs. 2 and 3.

In Fig. 5 an actuation arrangement is shown for four flaps 28, two flaps on each wing of an aircraft. The inboard flaps are driven using the actuation arrangement 6 as explained with respect to Fig. 4, i.e. the actuation arrangement 6 comprises two actuation assemblies, each of which comprising two power bridges 60a, 60b and 60c, 60d, respectively. The power bridges 60a, 60b and 60c, 60d are cross-connected, i.e. connected crosswise, with the two electric motors 26a and 26b. The two outboard flaps are driven using an actuation arrangement as explained with respect to Fig. 1, wherein each of the the actuation assemblies 8 comprise one power bridge 60 and consequently, two actuation assemblies 8 are needed for the electric motors 26 of each of the outboard flaps. In this example, the number of actuation assemblies needed for driving four flaps 28 is reduced to six.

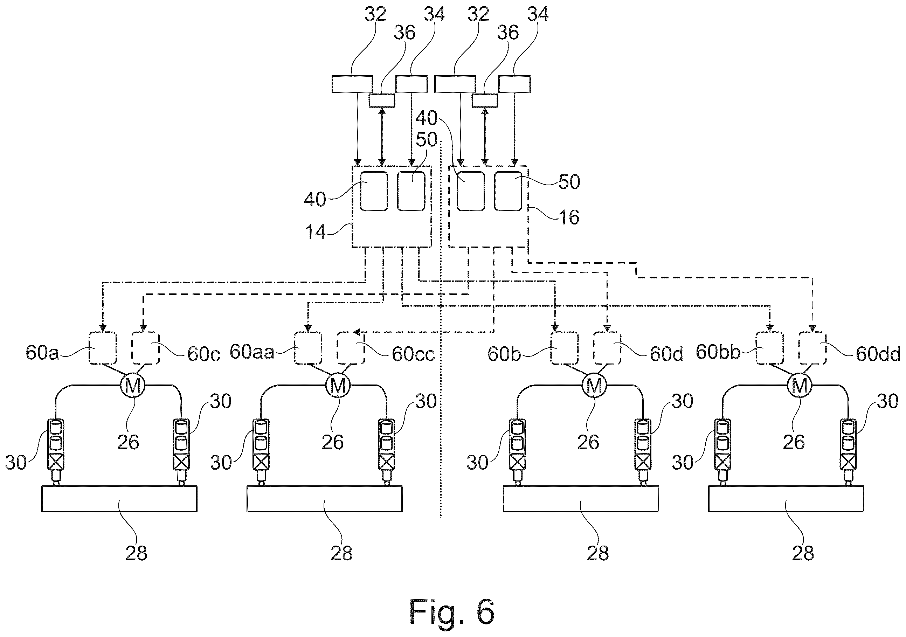

In Fig. 6, a further example of an actuation arrangement is shown. Here, two actuation assemblies 14, 16 are provided, each of which having a control unit 40 and a monitoring unit 50 arranged within a common housing defining a motor control electronics unit. Each of the actuation assemblies 14, 16 further comprises four power bridges spatially separated from the common housing in separate housings close to the electric motors 26. A primary actuation assembly 14 comprises a first primary power bridge 60a, a second primary power bridge 60aa, a third primary power bridge 60b and a fourth primary power bridge 60bb. A a secondary actuation assembly 16 comprises a first secondary power bridge 60c, a second secondary power bridge 60cc, a third secondary power bridge 60d and a fourth secondary power bridge 60dd. The total of eight separate power bridges get their power supply as well as the signals for the gate drivers from the two actuation assemblies 14, 16. The power bridges 60a, 60aa, 60b, 60bb; 60c, 60cc, 60d, 60dd are cross-connected, i.e. connected crosswise, with the electric motors 26. In this example, the number of actuation assemblies needed for driving four flaps 28 is reduced to two.

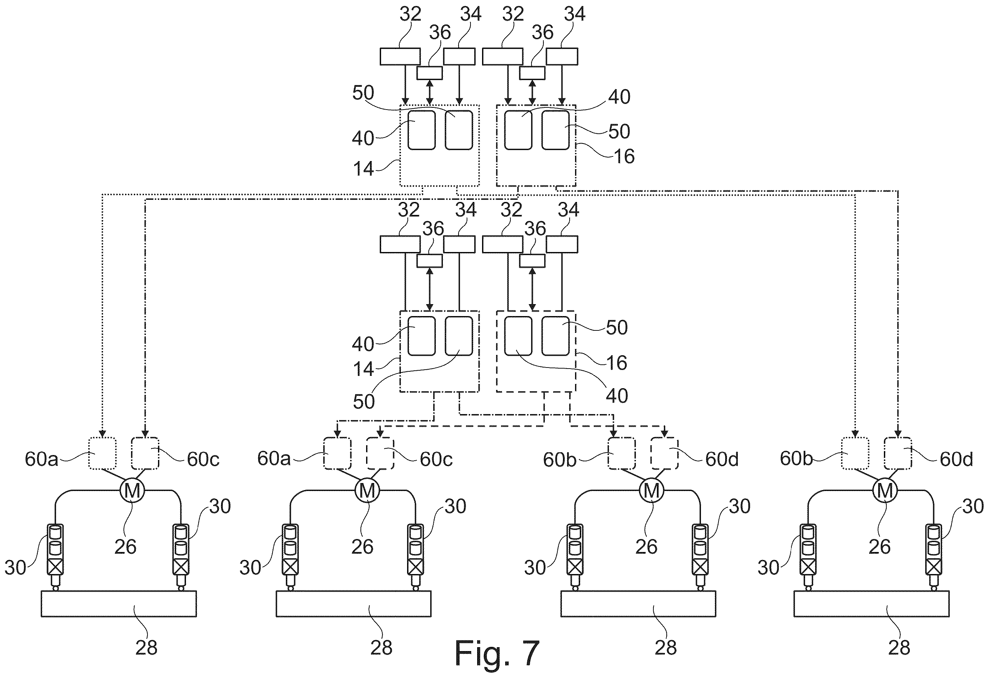

Fig. 7 illustrates a further example of an actuation arrangement, wherein two actuation arrangements with two actuation assemblies 14, 16 are provided, wherein for each actuation assembly 14, 16 two power bridges 60a, 60b; 60c, 60d are arranged spatially separated in separate housings close to the electric motors 26. Thus, the arrangement is similar to the arrangement shown in Fig. 4 except that the power bridges 60a, 60b; 60c, 60d are spatially separated from the housings of the actuation assemblies 14, 16 and that the assemblies 14, 16 are not arranged side by side (on the left wing and on the right wing) but "on top of each other", i.e. "embracing" each other. In this example, the number of actuation assemblies needed for driving four flaps 28 is reduced to four.

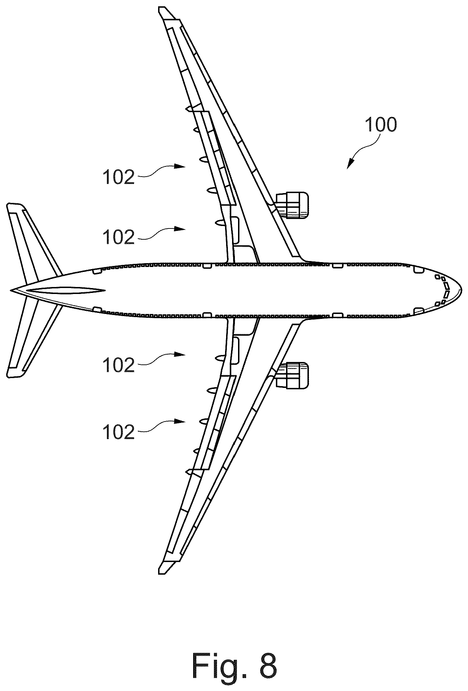

Fig. 8 shows an aircraft 100 comprising a high-lift system comprising an actuation arrangement with an actuation assembly as explained above with respect to Figs. 3-7. Flaps 102 are provided as movable flow bodies and and each of the flaps are operated by an actuation assembly, in combination constituting a trailing-edge high-lift system.

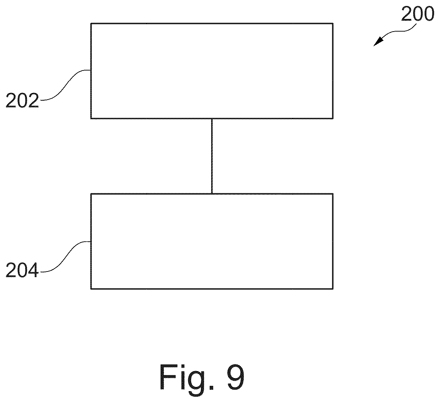

Fig. 9 shows a flow diagram of a method 200 for actuating a movable flow body of an aircraft, for example using the actuation assembly or actuation arrangement as explained above with respect to Figs. 3-7. A step 202 comprises providing a control unit, a monitoring unit and at least two power bridges. A next step 204 comprises providing high voltage supply to the at least two power bridges, which are each configured to be coupled with an electric motor.

### REFERENCE SIGNS

- 6: actuation arrangement
- 8: actuation assembly
- 10: actuation assembly
- 11: primary actuation assembly
- 12: secondary actuation assembly
- 14: motor control electronics unit
- 16: motor control electronics
- 26: electric motor
- 26a: first electric motor
- 26b: second electric motor
- 28: movable flow body
- 30: actuator
- 32: high voltage power supply
- 34: low voltage power supply
- 36: data network
- 40: control unit
- 50: monitoring unit
- 60: power bridge
- 60a: first primary power bridge
- 60aa: second primary power bridge
- 60b: second primary power bridge / third primary power bridge (in a variant)
- 60bb: fourth primary power bridge
- 60c: first secondary power bridge
- 60cc: second secondary power bridge
- 60d: second secondary power bridge / third secondary power bridge (in a variant)
- 60dd: fourth secondary power bridge
- 100: aircraft
- 102: flaps
- 200: method

## Claims

1. An actuation assembly (10), comprising:
- a control unit (40);
- a monitoring unit (50);
- at least one high voltage power supply (32);
- at least one low voltage power supply (34); and
- at least two power bridges (60a, 60b);
wherein the at least one low voltage power supply (34) is configured to be connected to a source to provide power to the control unit (40) and to the monitoring unit (50),
wherein the control unit (40) and the monitoring unit (50) are configured to monitor elements of a sub-system comprising at least one of an electric motor, a brake or a sensor;
wherein the at least one high voltage power supply (32) is configured to be connected to a source to provide power to each of the at least two power bridges (60a, 60b); and
wherein the at least two power bridges (60a, 60b) are each configured to be coupled with an electric motor.

2. Actuation assembly (10) according to claim 1, wherein the control unit (40), the monitoring unit (50) and the at least two power bridges (60a, 60b) are arranged within a common housing defining a motor control electronics unit.

3. Actuation assembly (10) according to claim 1, wherein the control unit (40) and the monitoring unit (50) are arranged within a common housing defining a motor control electronics unit, and the at least two power bridges (60a, 60b) are spatially separated from the common housing defining a motor control electronics unit.

4. Actuation assembly (10) according to claim 2 or 3, wherein the motor control electronics unit is configured to be connected with a data network (36) and the data network (36) is connected with a Flight Control Computer.

5. An actuation arrangement (6), comprising:
- a primary actuation assembly (11; 14) according to claim 2 or 3, comprising a first primary power bridge (60a) and a second primary power bridge (60b; 60aa); and
- a secondary actuation assembly (12; 16) according to claim 2, or 3 comprising a first secondary power bridge (60c) and a second secondary power bridge (60d; 60cc);
wherein the first primary power bridge (60a) is configured to be coupled with a first electric motor (26a; 26) and the second primary power bridge (60b; 60aa) is configured to be coupled with a second electric motor (26b; 26);
wherein the first secondary power bridge (60c) is configured to be coupled with the first electric motor (26a; 26) and the second secondary power bridge (60d; 60cc) is configured to be coupled with the second electric motor (26b; 26),
such that the first primary power bridge (60a) and the first secondary power bridge (60c) can drive the first electric motor (26a; 26) and the second primary power bridge (60b; 60aa) and the second secondary power bridge (60d; 60cc) can drive the second electric motor (26b; 26).

6. An actuation arrangement (6), comprising:
- a primary actuation assembly (14) according to claim 3, comprising a first primary power bridge (60a), a second primary power bridge (60aa), a third primary power bridge (60b) and a fourth primary power bridge (60bb); and
- a secondary actuation assembly (16) according to claim 3, comprising a first secondary power bridge (60c), a second secondary power bridge (60cc), a third secondary power bridge (60d) and a fourth secondary power bridge (60dd);
wherein the first primary power bridge (60a) is configured to be coupled with a first electric motor (26), the second primary power bridge (60aa) is configured to be coupled with a second electric motor (26); the third primary power (60b) bridge is configured to be coupled with a third electric motor (26); and the fourth primary power bridge (60bb) is configured to be coupled with a fourth electric motor (26);
wherein the first secondary power bridge (60c) is configured to be coupled with the first electric motor (26), the second secondary power bridge (60cc) is configured to be coupled with the second electric motor (26); the third secondary power bridge (60d) is configured to be coupled with the third electric motor (26); and the fourth secondary power bridge (60dd) is configured to be coupled with the fourth electric motor (26);
such that the first primary power bridge (60a) and the first secondary power bridge (60c) can drive the first electric motor (26), the second primary power bridge (60aa) and the second secondary power bridge (60cc) can drive the second electric motor, the third primary power bridge (60b) and the third secondary power bridge (60d) can drive the third electric motor (26), and the fourth primary power bridge (60bb) and the fourth secondary power bridge (60dd) can drive the fourth electric motor (26).

7. Actuation arrangement (6) according to claim 5 or 6, further comprising
- at least one electric motor (26);
- a plurality of transmission shafts; and
- a plurality of actuators (30);
wherein the at least two power bridges (60a, 60b) of the actuation assemblies are coupled each with one of the at least one electric motor (26),
wherein each of the at least one electric motor (26) is coupled with at least one of the plurality of transmission shafts,
wherein each of the plurality of transmission shafts is coupled with at least one of the plurality of actuators (30), and
wherein the plurality of actuators (30) is configured to be coupled with a movable flow body (28) of an aircraft.

8. A high-lift system comprising:
- at least one actuation arrangement (6) according to claim 7; and
- at least one movable flow body (28) of an aircraft;
wherein at least two actuators (30) of the actuation arrangement (6) are coupled with the at least one movable flow body (28) of the aircraft, such that the electric motor(s) (26) of the at least one actuation arrangement can drive the at least one movable flow body (28), and
wherein the high-lift system is a trailing edge high-lift system.

9. A wing of an aircraft, comprising at least one high-lift system according to claim 8.

10. An aircraft (100) comprising at least one wing according to claim 9 and/or at least one high-lift system according to claim 8 and/or at least one actuation arrangement (6) according to claims 5 to 7 and/or at least one actuation assembly (10) according to claims 1 to 4.

11. A method (200) for actuating a movable flow body of an aircraft, comprising the following steps:
- (202) providing a control unit, a monitoring unit and at least two power bridges; and
- (204) providing high voltage supply to the at least two power bridges;
wherein the at least two power bridges are each configured to be coupled with an electric motor.
